# EUROPEAN PATENT SPECIFICATION

(11) **EP 0 665 423 B1**
(45) Date of publication and mention of the grant of the patent: **15.12.1999**
(21) Application number: 94200252.8
(22) Date of filing: 31.01.1994
(51) Int. Cl.: G01L 3/14

(54) **A measuring element for measuring the power of a shaft, and a ship provided with such a measuring element**
Messelement zur Leistungsmessung einer Welle, und Schiff ausgestatted mit einem solchen Messelement
Elément de mesure pour mesurer la puissance d'un arbre, et bateau équipé d'un tel mesure

(43) Date of publication of application: 02.08.1995
(73) Proprietor: Techno Fysica B.V., 2991 LK Barendrecht (NL)
(72) Inventor: Uitermarkt, Rombartus Willem Pieter, NL-2954 BK Alblasserdam (NL)
(74) Representative: Land, Addick Adrianus Gosling

(56) References cited:
- EP-A- 0 575 634
- EP-A- 0 656 500
- WO-A-92/18840
- DE-A- 2 125 613
- DE-A- 4 208 522
- GB-A- 2 020 441
- NL-A- 9 201 386
- US-A- 4 471 663
- REPORTS IN APPLIED MEASUREMENT, vol.1, no.2, 1985, DARMSTADT DE pages 43 - 44 'CONTACTLESS TORQUE TRANSDUCER DESIGNED FOR VERY HIGH SPEEDS'

## Description

The present invention relates to a sensor for measurement of power of a shaft.

In the European patent application 0 656 500, which was published after the priority date of the present patent application, an apparatus is disclosed, which is provided with a motor power measuring cell for measuring the torque acting on the drive shaft. Said measuring cell is provided with a plurality of electrical resistance strain gages.

In EP-A-0 575 634, DE-A-42 08 522 and US-A-4.471.-663 a torque measuring element is disclosed, said measuring element being a ring shaped disk, having a number of first holes for receiving first security elements and a number of second holes for receiving second security elements, said measuring elements being securable to a first and second part, said measuring element also including a number of strain gages nearby the holes for supplying an electrical signal.

In JP-A-60122342 a measuring sensor is disclosed, in which two dynamometers are attached to a shaft of a ship.

It is desired, especially in the case of fishing vessels, to continually register the power of a rotating shaft, for instance the power from a shipping vessel's propeller shaft.

Fishing vessels are usually equipped with an engine of certain capacity, even though during fishing only limited use can be made of this engine capacity because of internationally agreed quotas partly based on the maximum engine capacity allowable. For instance there have been cases where licenses have been given out for an engine with a capacity of 300 hp, whilst in reality, an engine of 500 hp or more has been installed.

It is an object of the present invention to enable the continual registration of the power supplied to a shaft, from an engine.

The present invention provides a sensor for measurement of power of a shaft, to be fitted in between two flanges of said shaft, in particular a propeller shaft of a ship, the measuring sensor being **characterized by** a ring shaped measuring element, having alternating radially extending recesses, whereby adjacent recesses are on opposite sides of the ring element and each recess extends at its periphery to the other side of the ring by using radially extending slots in order to obtain opposite to each recess a free standing structure, supported by the solid outer ring part, each such structure having a hole for connecting the ring element in alternation to a first and second flange, and a strain gauge being disposed in each recess nearby the hole.

The preferred embodiment of the measuring element shows, amongst others, the advantages of being easily fitted onto an existing fishing vessel shaft system, of having processing electronics, not accessible by unauthorized persons, wherein the measured engine power is registered, and/or of having processing electronics which are protected from chemicals, static loads and/or magnetic fields.

Further advantages, features and details of the present invention will become clear with reference to the following description of the preferred embodiment thereof, illustrated with regards to the accompanying figures, in which:
fig. 1 is a perspective view of a fishing vessel provided with a preferred embodiment of a measuring element according to the present invention;
fig. 2 is an exploded, partly broken away side view of detail II from fig. 1;
fig. 3 is an sectional view through line III-III from fig. 2; and
fig. 4 is an exploded, partly broken away perspective view of the preferred embodiment from figures 2 and 3.

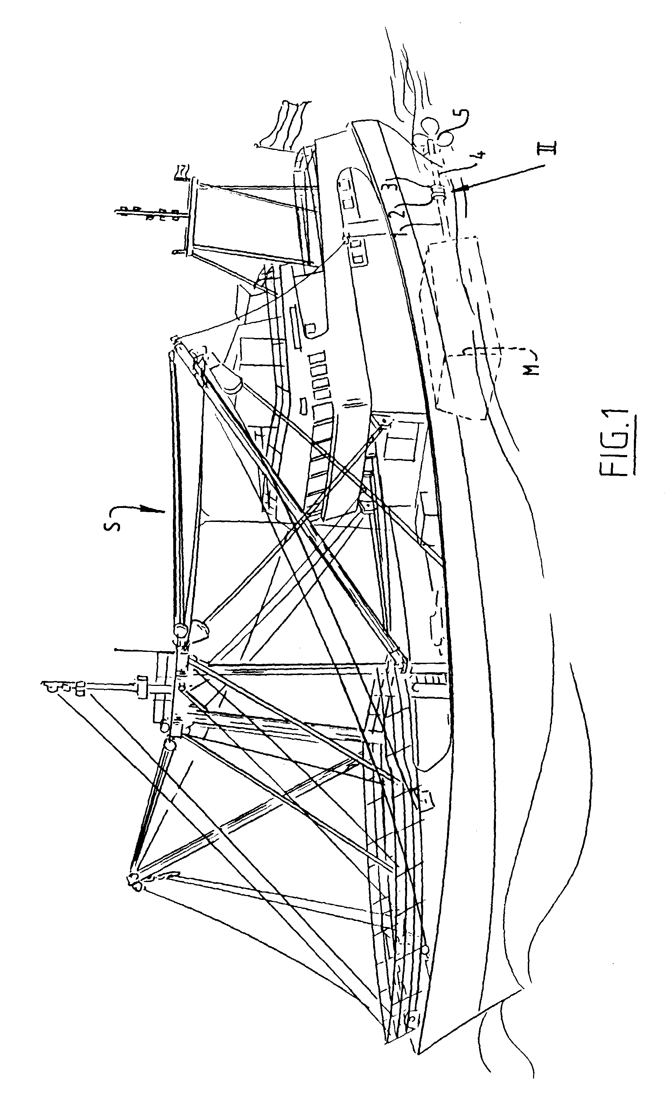

A ship S (fig. 1) is provided with a schematically indicated engine M including a gearbox for driving a first shaft part 1 at different speeds. This shaft part 1 is provided in the normal manner, with a flange 2 for securing to a flange 3 of a second shaft part or propellor shaft 4, for rotating the propellor 5.

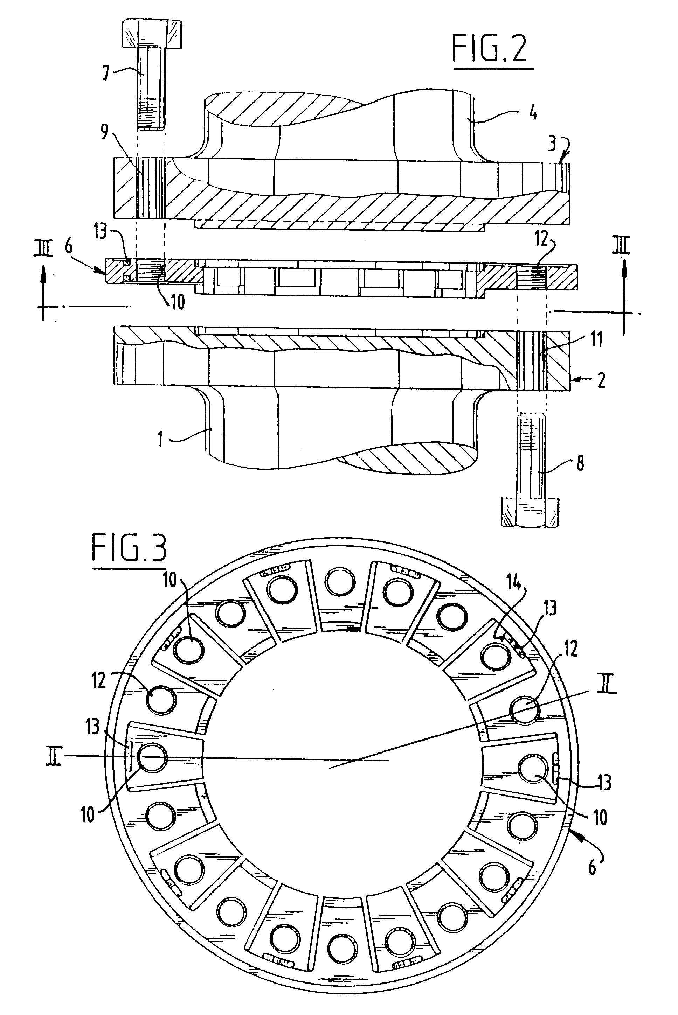

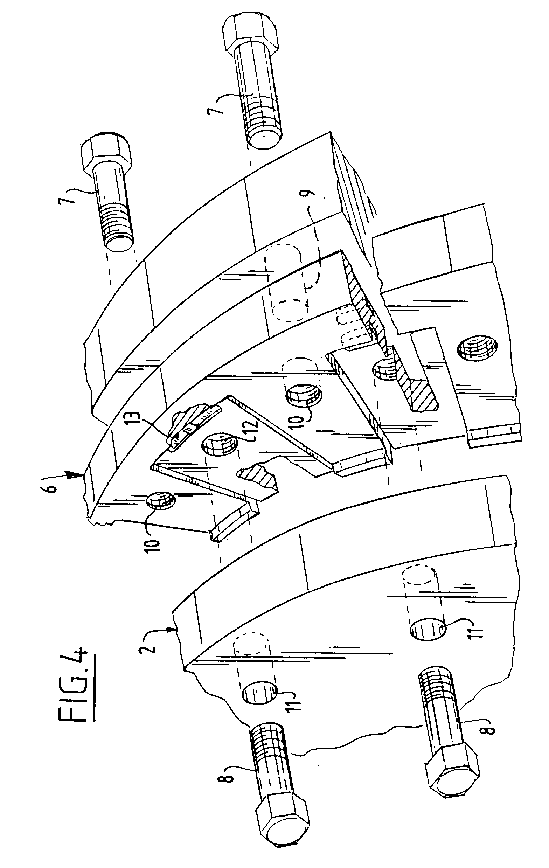

A measuring element 6 is fixed between the flanges 2 and 3 with the aid of bolts 7, 8 (fig. 2, 3, 4) so that the measuring element 6 is securable to both flange 2 and flange 3. The measuring element 6 requires only a thickness of 3 to 5 cm, in order to be integrated into an existing shaft system.

The screw bolts 7 extend through holes 9 in flange 3, and are screwed tight into screw thread holes 10 in the measuring element 6. The screw bolts 8 extend through holes 11 in flange 2 and are, in each case, screwed tightly into screw thread holes 12 in the measuring element 6. The flanges 2 and 3, which are normally connected together by means of screw bolts, and nuts which pass over the bolts, are, according to the present invention, connected via the measuring element 6 to each other.

In the present inventive example, the disc shaped measuring element 6 has twenty screw holes around the circumference, whereby in each case, every other bolt respectively screws flange 2 of shaft section 1 and flange 3 of shaft section 4 to the disc shaped measuring element 6. The torque exerted on the measuring element 6 is measured with the aid of schematically indicated strain gauges 13 which are positioned radially outwards with respect to the screw holes 10 (and the screw holes 12, not shown). The strain gauges 13 are arranged nearby a recess area 14, in the measuring element 6, to mechanically reinforce the shearing forces occurring.

An inaccuracy of 1 % or less is attainable for the measured power according to suitable calibrations with the help of suitable measuring methods, such as differential measuring and compensation measuring, in combination with data relating to shaft revolutions and power supplied to the shaft. Effects due to the gearwheel, or reduction gearbox, are minimized due to the measuring being directed to the power of the propellor shaft.

In the example of the embodiment shown, the measuring element is ring shaped, so that electric connections can be radially supplied to the strain gauges 13, (in a manner not shown) and so that an engine power registering card, with electric components, can be centrally positioned. The centrally positioned electronics are protected against magnetic influences and electronic loads due to the fact that the disc shaped measuring element is preferably made from metal. The electronics are also protected against moisture and chemicals by a sealing ring near the outer circumference of the measuring element.

The measuring element is provided (in a manner not shown) with an entrance terminal on the outer side, so that an authorized person can read the registered data taken up by the electronics. In order to stop unauthorized personal gaining access to this data, a secret code can be used. An extremely fraud resistant measuring system is obtained, due to the avoidance of air passages between the measuring signal and the centrally positioned electronics.

The electric power is preferably supplied (in a manner not shown) inductively to the electronics which means that the measuring element is provided with a number of conductive wire windings on its outer side, while, with the help of a primary winding thereon, continuous electrical energy is supplied during rotation. It will be evident that an energy source, such as a battery, can be associated with the electronics.

Although the embodiment herein shown and described, relates to its application in a fishing vessel, the present invention does not limit itself to this use; the measuring element can be used with other rotating shafts, for example with turbines and such like. The requested rights are specified by the following claims.

## Claims

1. Sensor for measurement of power of a shaft, to be fitted in between two flanges of said shaft, in particular a propeller shaft of a ship, the measuring sensor being **characterized by** a ring shaped measuring element, having alternating radially extending recesses, whereby adjacent recesses are on opposite sides of the ring element and each recess extends at its periphery to the other side of the ring by using radially extending slots in order to obtain opposite to each recess a free standing structure, supported by the solid outer ring part, each such structure having a hole for connecting the ring element in alternation to a first and second flange, and a strain gauge being disposed in each recess nearby the hole.

2. Measuring sensor according to claims 1, wherein processing electronics for the electric signals are centrally fitted in a receiving area of the measuring sensor.

3. Measuring sensor according to claim 1 or 2, provided with windings of electric conductive wire for the external, wireless supply of inductive power to the measuring sensor.

4. Measuring sensor according to claims 2 or 3, provided with an entrance terminal for the reading out, when the shaft parts are not in use, of the information recorded in the processing electronics.

5. Measuring sensor according to any of claims 1 - 4, having such thickness that it is fixable between said two flanges of said shaft, said thickness preferably being about 3 - 5 cm.

6. A ship provided with a measuring sensor according to any of the preceding claims.

## Patentansprüche

1. Sensor zur Messung der Leistung einer Welle, zur Anordnung zwischen zwei Flanschen der Welle, **gekennzeichnet** durch ein ringförmiges Meßelement mit alternierenden, radial verlaufenden Vertiefungen, wobei benachbarte Vertiefungen sich auf entgegengesetzten Seiten des Ringelements befinden und jede Vertiefung sich an ihrem Umfang zur anderen Seite des Rings erstreckt unter Verwendung von radial verlaufenden Schlitzen, so daß sich gegenüber jeder Vertiefung eine freistehende Struktur ergibt, die vom durchgehenden Aussenteil des Rings getragen ist, wobei jede derartige Struktur ein Loch zum Verbinden des Ringelements abwechselnd mit einem ersten und einem zweiten Flansch aufweist, und wobei in jeder Vertiefung nahe dem Loch ein Dehnungsmeßstreifen angeordnet ist.

2. Meßsensor nach Anspruch 1, wobei eine Verarbeitungselektronik für die elektrischen Signale zentral in einem Aufnahmebereich des Meßsensors angeordnet ist.

3. Meßsensor nach Anspruch 1 oder 2, mit Wicklungen eines elektrisch leitfähigen Drahtes für die externe drahtlose Zuführung von induktiver Leistung zu dem Meßsensor.

4. Meßsensor nach Anspruch 2 oder 3, mit einer Eingangsklemme für das Auslesen der in der Verarbeitungselektronik aufgezeichneten Information, wenn die Wellenteile außer Betrieb sind.

5. Meßsensor nach einem der Ansprüche 1-4 mit einer solchen Dicke, daß er zwischen den beiden Flanschen der Welle befestigbar ist, wobei die Dicke vorzugsweise etwa 3-5 cm beträgt.

6. Schiff mit einem Meßsensor gemäß einem der vorangehenden Ansprüche.

## Revendications

1. Capteur pour mesurer la puissance d'un arbre, à installer entre deux brides dudit arbre, en particulier un arbre d'hélice d'un bateau, le capteur de mesure étant caractérisé par un élément de mesure annulaire, ayant des évidements s'étendant radialement en alternance, dans lequel des évidements adjacents se trouvent sur des côtés opposés de l'élément annulaire et chaque évidement s'étend à sa périphérie jusqu'à l'autre côté de l'anneau en utilisant des fentes s'étendant radialement afin d'obtenir, en face de chaque évidement, une structure indépendante, supportée par la pièce annulaire extérieure pleine, chaque structure de ce type étant pourvue d'un orifice pour relier l'élément annulaire en alternance avec une première et une seconde bride, et une jauge de contrainte étant disposée dans chaque évidement près de l'orifice.

2. Capteur de mesure selon la revendication 1, dans lequel l'équipement électronique de traitement des signaux électriques est placé en position centrale dans une zone de réception du capteur de mesure.

3. Capteur de mesure selon la revendication 1 ou 2, équipé d'enroulements de fil conducteur électrique pour l'alimentation externe, sans fil, en puissance inductive du capteur de mesure.

4. Capteur de mesure selon la revendication 2 ou 3, pourvu d'une borne d'entrée pour la lecture, lorsque les pièces de l'arbre ne sont pas utilisées, des informations enregistrées dans l'équipement électronique de traitement.

5. Capteur de mesure selon l'une quelconque des revendications 1 à 4, ayant une épaisseur telle qu'elle peut être fixée entre lesdites deux brides dudit arbre, ladite épaisseur étant de préférence comprise entre environ 3 et 5 cm.

6. Bateau équipé d'un capteur de mesure selon l'une quelconque des revendications précédentes.
